Europäisches Patentamt
European Patent Office
Office européen des brevets

(19)

(11) Publication number: **0 460 613 A1**

(12) **EUROPEAN PATENT APPLICATION**

(21) Application number: **91109127.0**

(22) Date of filing: **04.06.91**

(51) Int. Cl.[5]: **C10M 107/34**, C10M 111/04, C09K 5/04, //(C10M107/34, 107:34),(C10M111/04,105:38, 105:42,105:48,107:34), C10N20:02,C10N40:30

(30) Priority: **08.06.90 JP 148666/90**

(43) Date of publication of application: **11.12.91 Bulletin 91/50**

(84) Designated Contracting States: **DE FR IT SE**

(71) Applicant: **NIPPON OIL CO. LTD.**
**3-12, Nishi Shinbashi 1-chome**
**Minato-ku Tokyo(JP)**

(72) Inventor: **Sakamoto, Tetsuro**
**3-517, Matsumi-cho, Kanagawa-ku**
**Yokohama-shi, Kanagawa-ken(JP)**
Inventor: **Sunami, Motoshi**
**4-4-17, Fujimidai, Nerima-ku**
**Tokyo(JP)**
Inventor: **Hasegawa, Hiroshi**
**1-1, Negishikasodai, Naka-ku**
**Yokohama-shi, Kanagawa-ken(JP)**

(74) Representative: **Kraus, Walter, Dr. et al**
**Patentanwälte Kraus, Weisert & Partner**
**Thomas-Wimmer-Ring 15**
**W-8000 München 22(DE)**

(54) **Lubricating oils for refrigerators.**

(57) A lubricating oil for refrigerators comprising as a base oil a polyoxyalkylene compound represented by the general formula

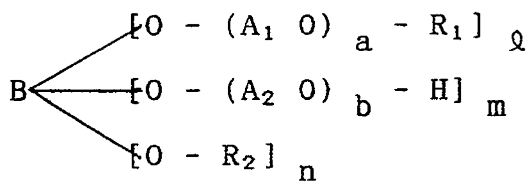

wherein B is a residue of a compound having 4 - 8 hydroxyl groups; $A_1$ and $A_2$ are each an alkylene group having 2 - 4 carbon atoms; $R_1$ and $R_2$ are each a hydrocarbon group having 1 - 10 carbon atoms; and a, b, ℓ, m and n are integers of 0 - 5, 0 - 5, 0 - 8, 2 - 8 and 0 - 7, respectively, with the proviso that the sum of (a•ℓ) and (b•m) equals to an integer of 1 - 20 and the sum of ℓ, m and n equals to an integer of 4 - 8.

EP 0 460 613 A1

## Background of the Invention

### 1. Field of the Invention

This invention relates to a lubricating oil for refrigerators (the oil being hereinafter referred to as "a refrigerator oil") and, more specifically, it relates to a refrigerator oil which comprises a polyalkylene compound having a specific chemical structure and is especially useful for refrigerators using therein HFC-134a as a refrigerant.

### 2. Prior Art

Heretofore, naphthenic mineral oils, paraffinic mineral oils, alkylbenzenes, polyglycolic oils and mixtures thereof, which have each a kinematio viscosity of 10 - 200 cSt at 40 °C, as well as said oils incorporated with suitable additives, have generally been used as refrigerator oils.

On the other hand, chlorofluorocarbon type refrigerants (CFCS), such as CFC-11, CFC-12, CFC-115 and hydrochlorofluorocarbon type refrigerant, such as HCFC-22, have been used as such for refrigerators.

Of these CFCS, those such as CFC-11, CFC-12 and CFC-115, which are obtained by substituting all the hydrogen atoms of their hydrocarbons by halogen atoms including chlorine atoms, may lead to the destruction of the ozone layer, and, therefore, the use of the CFCS has been restricted. Accordingly, hydrogen-containing halogenocarbons, particularly chlorine-free type halogenocarbons such as HFC-134a and HFC-152a, have been being used as substitutes for CFCS. HFC-134a is especially hopeful as a substitute refrigerant since it is similar in thermodynamic properties to CFC-12 which has heretofore been used in many kinds of refrigerators for home cold-storage chests, air-conditioners, car air-conditioners and the like.

Refrigerator oils require various properties, among which their miscibility with refrigerants is extremely important in regard to lubricity and system efficiency in refrigerators. However, conventional refrigerator oils comprising, as the base oils, naphthenic oils, paraffinic oils, alkylbenzenes and the like, are hardly miscible with chlorine-free type halogenocarbons such as HFC-134a. Therefore, if said conventional refrigerator oils are used in combination with HFC-134a, the resulting mixture will separate into two layers at normal temperature thereby to degrade the oil-returnability which is the most important within the refrigeration system and cause various troubles such as a decrease in refrigeration efficiency, the deterioration of lubricity and the consequent seizure of the compressor within the system whereby the refrigerator oils are made unsuitable for use as such.

In attempts to solve such problems, the present inventors developed polyglycolic refrigerator oils which have excellent miscibility with HFC-134a as compared with conventional known refrigerator oils, after which they filed an application for a patent for the thus developed polyglycolic refrigerator oils and have already obtained a patent (U.S.P. No. 4,948,525) therefor. Further, U.S. Patent No. 4,755,316 discloses polyglycolic refrigerator oils which are miscible with HFC-134a.

On the other hand, refrigerator oils may be required to have high viscosity depending on the purpose for which they are used. For example, lubricating oils used in refrigerators using therein a rotary or screw compressor should suitably be those having high viscosity since such refrigerators require that the lubricating oils be effective as a sealant for compressed refrigerants. However, the conventional polyglycolic refrigerator oils mentioned above will exhibit excellent miscibility with HFC-134a if they have comparatively low viscosity, while they will not necessarily exhibit excellent miscibility with HFC-134a if they have high viscosity.

## Summary of the Invention

The present inventors made further intensive studies in attempt to develop refrigerator oils which can meet the aforesaid requirements, in view of the fact that the conventional polyglycolic refrigerator oils have excellent miscibility with HFC-134a and, as the result of their studies, they found that polyoxyalkylene compounds having specific chemical structures have excellent miscibility with hydrogen-containing halogenocarbons such as HFC-134a even if said compounds are those having high viscosity, as compared with the conventional polyglycolic refrigerator oils. This invention is based on this finding.

The object of this invention is to provide refrigerator oils which comprise a polyoxyalkylene compound having a specific chemical structure and have excellent miscibility with hydrogen-containing halogenocarbons such as HFC-134a even if said oils have high viscosity.

The refrigerator oil of the present invention is characterized in that it comprises as a base oil a

polyoxyalkylene compound represented by the general formula

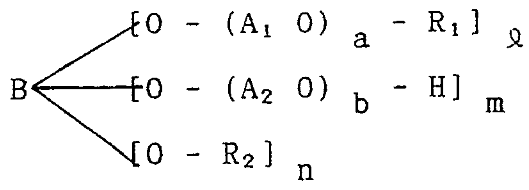

wherein B is a residue of a compound having 4 - 8 hydroxyl groups; $A_1$ and $A_2$ may be identical with, or different from, each other and are each an alkylene group having 2 - 4 carbon atoms; $R_1$ and $R_2$ may be identical with, or different from, each other and are each a hydrocarbon group having 1 - 10 carbon atoms; and a, b, ℓ, m and n are integers of 0 - 5, 0 - 5, 0 - 8, 2 - 8 and 0 - 7, respectively, with the proviso that the sum of (a • ℓ) and (b • m) equals to an integer of 1 - 20 and the sum of ℓ, m and n equals to an integer of 4 - 8.

The present invention will be explained in more detail hereunder.

The refrigerator oils of the present invention are those, as mentioned above, comprising as a base oil (an essential component) a polyoxyalkylene compound represented by the general formula

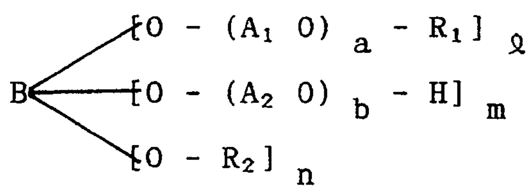 .

In the above formula, B is a residue of a compound having 4 - 8 hydroxyl groups; $A_1$ and $A_2$ may be identical with, or different from, each other and are each an alkylene group having 2 - 4 carbon atoms; $R_1$ and $R_2$ may be identical with, or different from, each other and are each a hydrocarbon group having 1 - 10 carbon atoms; and a, b, ℓ, m and n are integers of 0 - 5, 0 - 5, 0 - 8, 2 - 8 and 0 - 7, respectively, with the proviso that the sum of (a•ℓ) and (b•m) equals to an integer of 1 - 20 and the sum of ℓ, m and n equals to an integer of 4 - 8.

The compounds having 4 - 8 hydroxyl groups of which residue is B (these compounds being hereinafter referred to as "polyol compounds") are exemplified by polyhydric alcohols such as polyglycerin (diglycerin, triglycerin, tetraglycerin and the like), a dimer or trimer of trimethylolalkane (trimethylolethane, trimethylolpropane, trimethylolbutane and the like), monopentaerythritol, dipentaerythritol, tripentaerythritol, 1, 3, 5-pentanetriol, sorbitol, sorbitan, sorbitol glycerin condensate, adonitol, arabitol, xylitol and mannitol; saccharides such as xylose, arabinose, ribose, rhamnose, glucose, fructose, galactose, mannose, sorbose, cellobiose, maltose, isomaltose, trehalose, sucrose, raffinose, gentianose and melezitose; and partially etherified compounds, partially esterified compounds and methyl glucoside (glycoside) derived from said saccharides.

The alkylene groups having 2 - 4 carbon atoms and represented respectively by $A_1$ and $A_2$ are exemplified by ethylene group, propylene group, trimethylene group, butylene group, 1, 1-dimethylethylene group, 1, 2-dimethylethylene group, 1-methyltrimethylene group, 2-methyltrimethylene group and tetramethylene group.

The hydrocarbon groups having 1 - 10 carbon atoms and represented respectively by $R_1$ and $R_2$ are exemplified by methyl group, ethyl group, propyl group, isopropyl group, butyl group, isobutyl group, pentyl group, hexyl group, heptyl group, octyl group, nonyl group, decyl group, sec.-butyl group, tert.-butyl group, vinyl group, propenyl group, isopropenyl group, butenyl group and butadienyl group.

The polyoxyalkylene moiety of the polyoxyalkylene compound according to the present invention may contain in the molecule alkylene groups respectively having different numbers of carbon atoms and chemical structures, and, in this case, the oxyalkylene group may be a random copolymerized one or block copolymerized one.

A method for producing the polyoxyalkylene compound according to the present invention is not particularly limited. For example, the polyoxyalkylene compound can be produced by the addition reaction of 1 mol of a polyol compound with 4 - 30 mol, preferably 4 - 20 mol of an alkylene oxide and the subsequent etherification of a part of the terminal hydroxyl groups of the thus obtained adduct. Alternatively, the polyoxyalkylene compound can be produced by the reaction of a polyol compound with a halogenated

polyalkylene glycol of which terminal groups have been halogenated by chlorine, bromine or the like, in the presence of an alkali such as metallic sodium or sodium hydroxide and at a temperature of 80 - 150 °C. In this case, each of the polyol compound, the alkylene oxide and the polyalkylene glycol may consist of one kind thereof or a mixture of at least two kinds thereof. In the present invention, the obtained ethers (the polyoxyalkylene compounds according to this invention) may be used singly or jointly. Further, the obtained ethers may be refined to remove the by-products and/or unreacted reactants as impurities, or they may permit the by-products and/or unreacted reactants to be present therein in small amounts as far as these impurities so present do not impair the excellent performances of the lubricating oils of the present invention.

The polyoxyalkylene compounds according to the present invention are not particularly limited in molecular weight, but they are desired to have a number average molecular weight of preferably 200 - 3000, more preferably 300 - 2000, to improve the compressor in sealability.

The polyoxyalkylene compounds according to the present invention are also desired to have a kinematic viscosity of preferably 300 - 2000 cSt, more preferably 300 - 1500 cSt, at 40 °C, and preferably 20 - 50 cSt, more preferably 20 - 40 cSt, at 100 °C.

The refrigerator oil of the present invention may comprise the above polyoxyalkylene compound as the only base oil and, as required, it may be incorporated with conventional base oils for refrigerator oils. Among the conventional base oils, preferable ones are illustrated by polyglycols such as polyoxyalkylene glycols, polyoxyalkylene glycol monoethers, polyoxyalkylene glycol diethers and polyoxyalkylene glycol glycerol ethers; complex esters of a monohydric alcohol, a dihydric alcohol, a monocarboxylic acid and a dicarboxylic acid; esters of a neopentyl type polyol such as pentaerythritol, trimethylolpropane or a dimer or trimer thereof and an carboxylic acid; complex esters of a neopentyl type polyol, a monocarboxylic acid and a dicarboxylic acid; and carbonic acid esters.

These conventional base oils may be incorporated singly or jointly, and are desired to be incorporated in an amount of not more than 80 % by weight, preferably not more than 70 % by weight of the total amount of the lubricating oil of the present invention.

Further, the polyoxyalkylene compounds according to the present invention may be incorporated with other oils such as paraffinic mineral oils, naphthenic mineral oils, poly$\alpha$-olefins and alkylbenzenes, but, in this case, these other oils may desirably be incorporated in an amount of not more than 30 % by weight, preferably not more than 20 % by weight, of the total amount of the lubricating oils since these other oils are poor in miscibility with hydrogen-containing halogenocarbon refrigerants.

To further improve the lubricating oil of the present invention in antiwear property and extreme pressure property, the lubricating oil may be incorporated further with at least one kind of a phosphorus compound selected from the group consisting of phosphoric esters, acid phosphoric esters, amine salts of acid phosphoric esters, chlorinated phosphoric esters and phosphorous esters. These phosphorus compounds are esters of phosphoric acid or phosphorous acid and an alkanol or a polyether type alcohol, or are derivatives of the esters. The phosphoric esters are exemplified by tributyl phosphate, triphenyl phosphate and tricresyl phosphate. The acid phosphoric esters are exemplified by ditetradecyl acid phosphate, dipentadecyl acid phosphate, dihexadecyl acid phosphate, diheptadecyl acid phosphate and dioctadecyl acid phosphate. The amine salts of acid phosphoric esters are exemplified by salts of the above acid phosphoric esters and amines such as methylamine, ethylamine, propylamine, butylamine, pentylamine, hexylamine, heptylamine, octylamine, dimethylamine, diethylamine, dipropylamine, dibutylamine, dipentylamine, dihexylamine, diheptylamine, dioctylamine, trimethylamine, triethylamine, tripropylamine, tributylamine, tripentylamine, trihexylamine, triheptylamine and trioctylamine. The chlorinated phosphoric esters are exemplified by tris•dichloropropyl phosphate, tris•chloroethyl phosphate, tris•chlorophenyl phosphate and polyoxyalkylene•bis[di(chloroalkyl)] phosphate. The phosphorous esters are exemplified by dibutyl phosphite, dipentyl phosphite, dihexyl phosphite, diheptyl phosphite, dioctyl phosphite, dinonyl phosphite, didecyl phosphite, diundecyl phosphite, didodecyl phosphite, diphenyl phosphite, dicrecyl phosphite, tributyl phosphite, tripentyl phosphite, trihexyl phosphite, triheptyl phosphite, trioctyl phosphite, trinonyl phosphite, tridecyl phosphite, triundecyl phosphite, tridodecyl phosphite, triphenyl phosphite, tricresyl phosphite and mixtures thereof. These phosphorus compounds may desirably be added to the lubricating oil in a ratio of 0.01 - 5.0 % by weight, preferably 0.01 - 2.0 % by weight, of the total amount of the lubricating oil.

To further improve the lubricating oil of the present invention in stability, it may be incorporated with at least one kind of an epoxy compound selected from the group consisting of phenylglycidyl ether type epoxy compounds, glycidyl ester type epoxy compounds, epoxidized fatty acid monoesters and epoxidized vegetable oils. The said phenylglycidyl ether type epoxy compounds used herein include phenylglycidyl ether and alkylphenylglycidyl ethers. The said alkylphenylglycidyl ethers are those having 1 to 3 alkyl

groups having 1 to 13 carbon atoms, among which are preferred those having an alkyl group having 4 to 10 carbon atoms, such as butylphenylglycidyl ether, pentylphenylglycidyl ether, hexylphenylglycidyl ether, heptylphenylglycidyl ether, octylphenylglycidyl ether, nonylphenylglycidyl ether and decylphenylglycidyl ether. The said glycidyl ester type epoxy compounds include phenylglycidyl esters, alkylglycidyl esters and alkenylglycidyl esters, with glycidyl benzoate, glycidyl acrylate, glycidyl methacrylate and the like being preferred. The epoxidized fatty acid monoesters include esters of an epoxidized fatty acid having 12 to 20 carbon atoms and an alcohol having 1 to 8 carbon atoms, phenol or an alkylphenol. In particular, butyl, hexyl, benzyl, cyclohexyl, methoxyethyl, octyl, phenyl or butylphenyl esters of epoxidized stearic acid may preferably be used. The epoxidized vegetable oils include epoxidized compounds of vegetable oils such as soybean oil, linseed oil and cottonseed oil.

Among these epoxy compounds, the preferable ones include phenylglycidyl ether type epoxy compounds and epoxidized fatty acid monoesters with the former being more preferable. The most preferred are phenylglycidyl ether, butylphenylglycidyl ether and mixtures thereof.

In a case where these epoxy compounds are to be incorporated in the lubricating oil of the present invention, it is desirable that they be incorporated therein in a ratio of 0.1-5.0 % by weight, preferably 0.2-2.0 % by weight, of the total amount of the lubricating oil.

Furthermore, to further improve the lubricating oil of the present invention in antiwear property and extreme pressure property, it may be incorporated with a carboxylic acid represented by the general formula

$R_3\text{-}CH(COOH)_2$

and/or the general formula

$R_4\text{-}CH_2\text{-}COOH$

wherein $R_3$ and $R_4$ may be identical with, or different from, each other and are each an alkyl group having 8 - 18 carbon atoms.

The above carboxylic acids are exemplified by octylmalonic acid, nonylmalonic acid, decylmalonic acid, undecylmalonic acid, dodecylmalonic acid, tridecylmalonic acid, tetradecylmalonic acid, pentadecylmalonic acid, hexadecylmalonic acid, heptadecylmalonic acid, octadecylmalonic acid, decanoic acid, undecanoic acid, lauric acid, tridecanoic acid, myristic acid, pentadecanoic acid, palmitic acid, heptadecanoic acid, stearic acid, nonadecanoic acid, eicosanoic acid and mixtures of at least two kinds of the above carboxylic acids. In a case where these carboxylic acids are to be incorporated in the lubricating oil of the present invention, it is desirable that they be incorporated therein in a ratio of 0.01 - 3 % by weight, preferably 0.05 - 2 % by weight, of the total amount of the lubricating oil.

Of course, at least two kinds of the aforementioned phosphorus compounds, epoxy compounds and carboxylic acids may be used jointly.

To further enhance the lubricating oil of the present invention in performances, the lubricating oil may be incorporated, as required, with heretofore known additives for a refrigerator oil, which include phenol-type antioxidants such as di-tert.-butyl-p-cresol and bisphenol A; amine-type antioxidants such as phenyl-α-naphthylamine and N,N-di(2-naphthyl)-p-phenylenediamine; wear resistant additives such as zinc dithiophosphate; extreme pressure agents such as chlorinated paraffin and sulfur compounds; oiliness improvers such as fatty acids; antifoaming agents such as silicone-type ones; and metal inactivators such as benzotriazole. These additives may be used singly or jointly. The total amount of these additives added is ordinarily not more than 10 % by weight, preferably not more than 5 % by weight, of the total amount of the lubricating oil.

In a case where conventional base oils for refrigerator oils and/or additives are to be incorporated in the refrigerator oil of the present invention, it is desirable that the polyoxyalkylene compound according to this invention be contained in the resulting lubricating oil in a ratio of not less than 20 % by weight, preferably not less than 30 % by weight, of the total amount of the lubricating oil.

The refrigerator oil of the present invention comprising the above polyoxyalkylene compound should have such viscosity and pour point as those which are normally suitable for an ordinary refrigerator oil, but it should desirably have a pour point of not higher than -10 °C, preferably -20 °C to -80 °C, to prevent it from solidification at a low temperature.

The refrigerator oils of the present invention are those having a kinematic viscosity of 300 - 2000 cSt, preferably 300 - 1500 cSt, at 40 °C, and 20 - 50 cSt, preferably 20 - 40 cSt, at 100 °C; however, in spite of having such high viscosity, they are greatly excellent in miscibility with hydrogen-containing halogenocarbons, particularly chlorine-free type halogenocarbons, as compared with the heretofore known refrigerator oils.

The refrigerants which may be used in refrigerators in which the lubricating oils of the present invention are used, include hydrogen-containing halogenocarbons such as trifluoromethane (HFC-23), pentafluoroethane (HFC-125), 1, 1,2,2-tetrafluoroethane (HFC-134), 1,1,1,2-tetrafluoroethane (HFC-134a), 1,1-difluoroethane (HFC-152a), monochlorodifluoromethane (HCFC-22), 1-chloro-1,1-difluoroethane (HCFC-142b), dichlorotrifluoroethane (HCFC-123) and monochlorotetrafluoroethane (HCFC-124); hydrogen-free halogenocarbons such as trichloromonofluoromethane(CFC-11) dichlorodifluoromethane (CFC-12), monochlorotrifluoromethane (CFC-13) and monochloropentafluoroethane (CFC-115); and mixtures of at least two of the halogenocarbons. Among these halogenocarbons, the hydrogen-containing halogenocarbons are preferable with chlorine-free type halogenocarbons such as HFC-23, HFC-125, HFC-134, HFC-134a and HFC-152a, being particularly preferable in view of the environmental problems. The most preferred is HFC-134a. The lubricating oils of the present invention are those which are miscible with HFC-134a in the temperature range of ordinarily -10 - 40 °C, preferably -30 - 50 °C.

The refrigerator oils of the present invention may particularly preferably be used in air-conditioners, dehumidifiers, cold-storage chests, freezers, freeze and refrigeration warehouses, automatic vending machines, showcases, cooling units in chemical plants, and the like which have a reciprocating or rotary compressor. Further, the above refrigerator oils may also preferably be used in refrigerators having a centrifugal compressor.

The present invention will be better understood by the following Examples and Comparative Examples.

Examples 1 - 4 and Comparative Examples 1 - 4

Lubricating oils of the present invention and comparative lubricating oils of conventional types are illustrated as follows:

[Example 1] A test oil comprising a polyoxyalkylene compound produced by the addition reaction of 1 mol of methyl glucoside with 10 mol of propylene oxide
(average molecular weight: about 780)

[Example 2] A test oil comprising a polyoxyalkylene compound produced by addition reacting 1 mol of methyl glucoside with 5 mol of propylene oxide and 5 mol of ethylene oxide
(average molecular weight: about 710)

[Example 3] A test oil comprising a polyoxyalkylene compound produced by the methyl etherification of 25% of the terminal hydroxyl groups of the compound produced in Example 1
(average molecular weight: about 790)

[Example 4] A test oil comprising a mixture of 50% by weight of the compound produced in Example 1 and 50% by weight of a polyalkylene glycol monobutyl ether having an average molecular weight of about 1800

[Comparative Example 1] A naphthenic mineral oil

[Comparative Example 2] Polyoxypropylene glycol monobutyl ether (average molecular weight: about 1800)

[Comparative Example 3] Polyoxypropylene oxyethylene glycol monobutyl ether (average molecular weight: about 1800)

[Comparative Example 4] Polyoxypropylene glycol dimethyl ether (average molecular weight: about 2000)

The base oils of the lubricating oils of the present invention produced in Examples 1 - 4 were each evaluated for its performances that were miscibility with HFC-134a, and the results are indicated, together with the kinematic viscosities at 40 °C and 100 °C of the base oils, in Table 1. For comparison, the mineral oil and the polyalkylene glycols (Comparative Examples 1 - 4), which have heretofore been used as lubricating oils were evaluated for their performances as mentioned above, and the results are also indicated in Table 1. The methods for evaluating the above performances are as indicated hereunder:

(Miscibility with HFC-134a)

0.2 g of the test oil of each of the Examples and the Comparative Examples and 2 g of the refrigerant (HFC-134a) were sealed in a glass tube having an inner diameter of 6 mm and a length of 220 mm. The glass tubes so sealed were placed in a thermostat maintained at a predetermined low temperature and then in a thermostat kept at a predetermined high temperature to observe whether the refrigerant and the test oil were miscible with each other, separated from each other or made white-turbid.

Table 1

| Example · Comparative Example | Kinematic viscosity at 40°C cSt | Kinematic viscosity at 100°C cSt | Temperature range wherein oil is miscible with HFC-134a °C |
|---|---|---|---|
| Example 1 | 1210 | 33.7 | <-70 - 65 |
| Example 2 | 1120 | 30.2 | <-70 - 68 |
| Example 3 | 950 | 25.0 | -60 - 55 |
| Example 4 | 310 | 30.2 | -70 - 58 |
| Compartive Example 1 | 92 | 10.2 | Immiscible |
| Compartive Example 2 | 210 | 30.2 | Immiscible |
| Compartive Example 3 | 180 | 30.8 | -20 - 5 |
| Compartive Example 4 | 205 | 30.5 | -7 - 2 |

It is apparent from the results indicated in Table 1 that the lubricating oils (Examples 1 - 4) of the present invention are very excellent in miscibility with a refrigerant, HFC-134a, as compared with the conventional lubricating oils of Comparative Examples 1 - 4, and are suitable for use in refrigerators using therein a hydrogen-containing halogenocarbon, particularly a chlorine-free type halogenocarbon, as a refrigerant.

(Effect of the Invention)

As is apparent from the above comparative experiments, the refrigerator oils of the present invention which comprise a polyoxyalkylene compound having a specific chemical structure are excellent in miscibility with hydrogen-containing halogenocarbons such as HFC-134a, even if said oils have high viscosity.

## Claims

1. A lubricating oil for refrigerators comprising as a base oil a polyoxyalkylene compound represented by the general formula

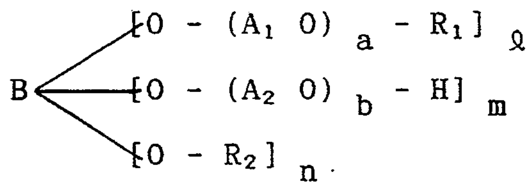

wherein B is the residue of a compound having 4 - 8 hydroxyl groups; $A_1$ and $A_2$ may be identical with, or different from, each other and are each an alkylene group having 2 - 4 carbon atoms; $R_1$ and $R_2$ may be identical with, or different from, each other and are each a hydrocarbon group having 1 - 10 carbon atoms; and a, b, $\ell$, m and n are integers of 0 - 5, 0 - 5, 0 - 8, 2 - 8 and 0 - 7, respectively, with the proviso that the sum of ($a \cdot \ell$) and ($b \cdot m$) equals to an integer of 1 - 20 and the sum of $\ell$, m and n equals to an integer of 4 - 8.

**2.** A lubricating oil according to claim 1, wherein the polyoxyalkylene compound is one having a kinematic viscosity of 300 - 2000 cSt at 40 °C and 20 - 50 cSt at 100 °C.

**3.** A lubricating oil according to claim 1, wherein the base oil is a mixture oil of:
(I) said polyoxyalkylene compound and
(II) at least one kind of an oil selected from the group consisting of (1) polyglycols which are polyoxyalkylene glycols, polyoxyalkylene glycol monoethers, polyoxyalkylene glycol diethers and polyoxyalkylene glycol glycerol ethers, and (2) esters which are complex esters of a monohydric alcohol, a dihydric alcohol, a monocarboxylic acid and a dicarboxylic acid, esters of a neopentyl type polyol and an carboxylic acid, complex esters of a neopentyl type polyol, a monocarboxylic acid and a dicarboxylic acid, and carbonic acid esters.

**4.** A lubricating oil according to claim 2, wherein the base oil is a mixture oil of:
(I) said polyoxyalkylene compound and
(II) at least one kind of an oil selected from the group consisting of (1) polyglycols which are polyoxyalkylene glycols, polyoxyalkylene glycol monoethers, polyoxyalkylene glycol diethers and polyoxyalkylene glycol glycerol ethers, and (2) esters which are complex esters of a monohydric alcohol, a dihydric alcohol, a monocarboxylic acid and a dicarboxylic acid, esters of a neopentyl type polyol and an carboxylic acid, complex esters of a neopentyl type polyol, a monocarboxylic acid and a dicarboxylic acid, and carbonic acid esters.

**5.** A lubricating oil according to claim 3, wherein said at least one kind of the oil (II) is comprised in an amount of not more than 80 % by weight of the total amount of the lubricating oil.

**6.** A lubricating oil according to claim 4, wherein said at least one kind of the oil (II) is comprised in an amount of not more than 80 % by weight of the total amount of the lubricating oil.

European Patent Office

# EUROPEAN SEARCH REPORT

Application Number

**EP 91 10 9127**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| P,X | EP-A-0 379 175 (THE DOW CHEMICAL CO.)<br>* Claim 2 *<br>- - - | 1 | C 10 M 107/34<br>C 10 M 111/04<br>C 09 K 5/04 //<br>(C 10 M 107/34<br>C 10 M 107:34 )<br>(C 10 M 111/04<br>C 10 M 105:38<br>C 10 M 105:42<br>C 10 M 105:48<br>C 10 M 107:34 )<br>C 10 N 20:02<br>C 10 N 40:30 |
| X | US-A-4 851 144 (P.W. McGRAW)<br>* Column 3, line 10; claim 2 *<br>- - - | 1,3,5 | |
| X | DE-A-2 943 446 (NIPPON OIL CO.)<br>* Page 5, line 19 - page 6, line 20 *<br>- - - | 1,2 | |
| X | US-A-4 302 343 (R. CARSWELL)<br>* Column 3, lines 28,29; claim 1 *<br>- - - | 1,3,5 | |
| X | US-A-3 871 837 (P. BEDAGUE)<br>* Column 2, lines 50-64 *<br>- - - | 1 | |
| A | US-A-4 900 463 (R.H. THOMAS)<br>* Column 6, lines 18-60 *<br>- - - | 1 | |
| P,A | EP-A-0 377 122 (IDEMITSU KOSAN CO.)<br>* Page 3, line 50 - page 4, line 2; page 5, lines 30-35 *<br>- - - - - - | 1 | TECHNICAL FIELDS SEARCHED (Int. Cl.5)<br>C 10 M<br>C 09 K |

The present search report has been drawn up for all claims

| Place of search | Date of completion of search | Examiner |
|---|---|---|
| The Hague | 13 September 91 | HILGENGA K.J. |

CATEGORY OF CITED DOCUMENTS

X: particularly relevant if taken alone
Y: particularly relevant if combined with another document of the same catagory
A: technological background
O: non-written disclosure
P: intermediate document
T: theory or principle underlying the invention

E: earlier patent document, but published on, or after the filing date
D: document cited in the application
L: document cited for other reasons

&: member of the same patent family, corresponding document